# EUROPÄISCHE PATENTANMELDUNG

(11) **EP 4 597 052 A1**
(43) Veröffentlichungstag der Anmeldung: **06.08.2025**
(21) Anmeldenummer: 24155317.1
(22) Anmeldetag: 01.02.2024
(51) Int. Cl.: G01G 11/18, A47J 37/04, G01G 17/00, G01G 19/414, G01G 19/52

(54) **EINRICHTUNG ZUR GEWICHTSMESSUNG VON ANTEILEN EINES GEGRILLTEN LEBENSMITTELS, EINRICHTUNG ZUR ZUBEREITUNG EINES ZU GRILLENDEN LEBENSMITTELS, VERFAHREN ZUR ZUBEREITUNG EINES ZU GRILLENDEN LEBENSMITTELS UND COMPUTERPROGRAMM**

(71) Anmelder: Öncebe, Fatih Mehmet, 13357 Berlin (DE)
(72) Erfinder: Öncebe, Fatih Mehmet, 13357 Berlin (DE)
(74) Vertreter: Schulz Junghans Patentanwälte PartGmbB

(57) **Zusammenfassung**

Die Erfindung betrifft eine Einrichtung zur Gewichtsmessung von Anteilen eines gegrillten Lebensmittels, Einrichtung zur Zubereitung eines zu grillenden Lebensmittels, ein Verfahren zur Zubereitung eines zu grillenden Lebensmittels und ein Computerprogramm zur Umsetzung des Verfahrens.

Die Einrichtung zur Gewichtsmessung (20) von Anteilen eines gegrillten Lebensmittels umfasst eine Waageneinrichtung zum Wiegen von gegrillten Lebensmittelanteilen, wobei die Waageneinrichtung eine Entnahme-Wiegefunktion und eine Portions-Wiegefunktion aufweist, und die Entnahme-Wiegefunktion die Bestimmung des Gewichts gegrillter, von von einer Grilleinrichtung entnommener Lebensmittelanteile (31) ist, und die Portions-Wiegefunktion die Bestimmung des Gewichts von aus den entnommenen Lebensmittelanteilen erstellten Lebensmittel-Portionen (41) ist.

## Beschreibung

Die vorliegende Erfindung betrifft eine Einrichtung zur Gewichtsmessung von Anteilen eines gegrillten Lebensmittels, Einrichtung zur Zubereitung eines zu grillenden Lebensmittels, ein Verfahren zur Zubereitung eines zu grillenden Lebensmittels und ein Computerprogramm zur Umsetzung des Verfahrens.

Seit Jahrtausenden ist die Zubereitung von Lebensmitteln mittels Grillen bekannt. Dabei wird das zuzubereitende Lebensmittel der Abwärme einer Wärmequelle ausgesetzt, ohne dass sich zwischen der Wärmequelle und dem Lebensmittel ein geschlossenes Element bzw. ein weiterer Behälter befindet. Gegebenenfalls kann ein Grillrost dazu eingerichtet sein, zumindest anteilig Gewicht des Lebensmittels aufzunehmen und dabei sich zwischen der Wärmequelle und dem Lebensmittel zu befinden.

Beim Grillen erfolgt ein Gar-Prozess des Lebensmittels. Viele Grillprozesse beziehen sich auf die Zubereitung von Fleisch als Lebensmittel, wobei jedoch auch bekannt ist, Fisch, Käse und/oder Gemüse zu grillen. Des Weiteren ist auch nicht ausgeschlossen, Fleischersatzprodukte zu grillen.

Insbesondere bei der Zubereitung von Fleisch durch Grillen ist aufgrund der industriellen Masthaltung von Tieren und der industriellen Fleischverarbeitung ein sehr unterschiedlicher Anteil von Fett und/oder Wasser im Fleisch zu verzeichnen.

Beim Grillen erhält aufgrund der eingebrachten Wärme das Fett eine geringere Viskosität und fließt aus dem Fleisch heraus. Wasser verdampft aufgrund der eingebrachten Wärme.

Daher ist ein Gewichtsunterschied zwischen der theoretisch verfügbaren Fleischmenge vor dem Grillen und der nach dem Grillen zum Verzehr bereitgestellten Fleischmenge zu verzeichnen.

Beim Betrieb von Grillrestaurants, wie zum Beispiel bei Grillrestaurants, die sich auf die Zubereitung von Döner Kebab spezialisiert haben, ist üblicherweise ein hoher Durchsatz gegrillten Fleisches je Zeiteinheit zu verzeichnen. Allerdings erfolgt die Positionierung der Fleischmengen je Döner Kebab in manueller Weise und daher mit nicht immer konstanter Menge bzw. konstanten Gewichts der ausgegebenen Fleischportionen.

Es ist wünschenswert, sowohl den Fett- bzw. Wasser-Anteil bestimmen zu können als auch die Portionsmengen überwachen zu können.

Der vorliegenden Erfindung liegt daher die Aufgabe zugrunde, eine Einrichtung zur Gewichtsmessung von Anteilen eines gegrillten Lebensmittels, eine Einrichtung zur Zubereitung eines zu grillenden Lebensmittels, ein Verfahren zur Zubereitung eines zu grillenden Lebensmittels unter Ausführung von Gewichtskontrollen sowie ein Computerprogramm zur Verfügung zu stellen, mit denen gegrillte Lebensmittelanteile gewogen und entsprechende Messwerte einer Auswertung zugeführt werden können.

Diese Erfindung wird durch die Einrichtung zur Gewichtsmessung von Anteilen eines gegrillten Lebensmittels nach Anspruch 1, durch die Einrichtung zur Zubereitung eines zu grillenden Lebensmittels nach Anspruch 11, durch das Verfahren zur Zubereitung eines zu grillenden Lebensmittels unter Ausführung von Gewichtskontrollen nach Anspruch 12 und durch das Computerprogramm nach Anspruch 13 gelöst. Vorteilhafte Ausführungsformen der Einrichtung zur Gewichtsmessung von Anteilen eines gegrillten Lebensmittels sind in den Unteransprüchen 2-10 angegeben. Eine vorteilhafte Ausführungsform des Computerprogramms ist im Unteranspruch 14 angegeben.

Durch die Erfindung wird eine Einrichtung zur Gewichtsmessung von Anteilen eines gegrillten Lebensmittels zur Verfügung gestellt, welche eine Waageneinrichtung zum Wiegen von gegrillten Lebensmittelanteilen umfasst, wobei die Waageneinrichtung eine Entnahme-Wiegefunktion und eine Portions-Wiegefunktion aufweist. Die Entnahme-Wiegefunktion ist die Bestimmung des Gewichts gegrillter, von von einer Grilleinrichtung entnommener Lebensmittelanteile, und die Portions-Wiegefunktion ist die Bestimmung des Gewichts von aus den entnommenen Lebensmittelanteilen erstellten Lebensmittel-Portionen.

Das zu grillende bzw. gegrillte Lebensmittel kann zum Beispiel ein Grill-Fleischspieß sein, wie z.B. ein Döner Kebab. Dabei soll zur Beschreibung der vorliegenden Erfindung davon ausgegangen werden können, dass ein derartiger Fleischspieß neben Fleisch gegebenenfalls auch noch andere Bestandteile enthalten kann, wie zum Beispiel Gemüse und/oder Teigwaren.

Die Entnahme gegrillter Lebensmittelanteile kann aus einer Grilleinrichtung bzw. Grillstation, die dabei Bestandteil der Einrichtung zur Gewichtsmessung von Anteilen eines gegrillten Lebensmittels sein kann, erfolgen, wie zum Beispiel schwerkraftbedingt. So können zum Beispiel von einem Kebab-Spieß abgeschnittene Fleischbestandteile schwerkraftbedingt nach unten und somit auf die Waageneinrichtung mit Entnahme-Wiegefunktion fallen.

Die Einrichtung zur Gewichtsmessung von Anteilen eines gegrillten Lebensmittels kann dabei derart ausgestaltet sein, dass eine Waageneinrichtung für die Entnahme-Wiegefunktion und eine Waageneinrichtung für die Portions-Wiegefunktion in derselben Waage eingerichtet sind.

In alternativer Ausführungsform ist die Waageneinrichtung für die Entnahme-Wiegefunktion eine Entnahme-Waage, und die Waageneinrichtung für die Portions-Wiegefunktion ist eine Portions-Waage, wobei die Entnahme-Waage eine andere Waage ist als die Portions-Waage. Das heißt, dass in dieser Ausführungsform die Waageneinrichtung mit Entnahme-Wiegefunktion und die Waageneinrichtung mit Portions-Wiegefunktion einzelne Geräte sind.

Jede der Waagen kann eine lebensmittelechte und geeichte Waage mit frei platzierbarem Wägeterminal und abnehmbarer Edelstahlplattform sein.

Die Waageneinrichtung mit Entnahme-Wiegefunktion kann dazu eingerichtet sein, kontinuierlich oder bei jeder Veränderung des von der Waageneinrichtung mit Entnahme-Wiegefunktion gewogenen Gewichts einen entsprechenden Messwert festzustellen. Entsprechend kann die Waageneinrichtung mit Entnahme-Wiegefunktion bei verzeichneter Gewichts-Zunahme, wenn also beispielsweise wieder Fleisch von einem Fleischspieß in der Grillstation entnommen wurde, eine Messung durchführen, oder aber, wenn Fleisch von der Waageneinrichtung mit Entnahme-Wiegefunktion weggenommen wird und in den Verkauf gebracht wird. Die Waageneinrichtung mit Entnahme-Wiegefunktion misst entsprechend, was im Laufe einer Zeiteinheit, wie zum Beispiel innerhalb eines Tages, alles beispielsweise von einem Kebab-Spieß abgeschnitten bzw. entnommen wurde und in den Verkauf gelangt sein sollte. Wenn der Kebab-Spieß verbraucht ist, gegebenenfalls bis auf einen Rest-Anteil, kann also mit der Waageneinrichtung mit Entnahme-Wiegefunktion ermittelt werden, wie viel Fleisch aus dem Kebab-Spieß überhaupt in den Verkauf gelangen konnte. Dies ermöglicht eine Aussage darüber, welche Qualität der Kebab-Spieß hatte, und wie viel Wasser und/oder Fett er enthielt.

Die Waageneinrichtung für die Entnahme-Wiegefunktion kann dazu eingerichtet sein, unterhalb der Grilleinrichtung angeordnet zu sein, so dass von einem in der Grilleinrichtung angeordnetem gegrillten Lebensmittel abgetrennte bzw. entnommene Lebensmittelanteile auf die Waage für die Entnahme-Wiegefunktion fallen und dort gewogen werden können.

Des Weiteren kann die Waageneinrichtung mit Entnahme-Wiegefunktion eine Aufnahmeeinrichtung zur Aufnahme von von dem gegrillten Lebensmittel ablaufenden Wassers und/ oder Fetts aufweisen und dazu eingerichtet sein, das aufgenommene Wasser und/ oder Fett zu wiegen.

Das Fett kann ebenfalls mit der Waageneinrichtung mit Entnahme-Wiegefunktion aufgenommen und gewogen werden, sodass dessen Anteil ebenfalls festgestellt werden kann.

Die Information hinsichtlich der tatsächlich erhaltenen Menge an verkaufbaren Lebensmittelanteilen bzw. Fleisch bietet zudem eine Aussage hinsichtlich des Anteils des tatsächlich verwertbaren Lebensmittels und den daraus getätigten Einnahmen, gegenüber den getätigten Kosten für den Erwerb des Lebensmittels.

Des Weiteren kann die Waageneinrichtung mit Entnahme-Wiegefunktion dazu eingerichtet sein, die Verweildauer entnommener Lebensmittelanteile auf der Waage zu messen und/ oder zu speichern.

Die Waageneinrichtung mit Entnahme-Wiegefunktion kann dafür eingerichtet sein, Messdaten an eine Datenbank oder über eine Internet-Schnittstelle an eine Datenbank oder an einen Clouddienst mit einer Datenbank zu übermitteln.

Entnommene Lebensmittelanteile, die mittels der Waageneinrichtung mit Entnahme-Wiegefunktion gewogen wurden, können nun in kleineren Mengen auf die Waageneinrichtung mit Portions-Wiegefunktion übernommen werden, um Portionen zu portionieren.

Die Waageneinrichtung mit Portions-Wiegefunktion kann dazu eingerichtet sein, auf einer Anzeigeeinheit eine Auswahl von verfügbaren gegrillten Lebensmittelspeisen anzuzeigen und/ oder das Gewicht von verfügbaren gegrillten Lebensmittelspeisen anzuzeigen, und durch Eingabe eines Steuerbefehls eine vom Kunden gewünschte gegrillte Lebensmittelspeise auszuwählen und/ oder das Gewicht der vom Kunden gewünschten gegrillten Lebensmittelspeise auszuwählen.

Des Weiteren kann die Waageneinrichtung mit Portions-Wiegefunktion dazu eingerichtet sein, ein vorher definiertes Portionsgewicht einer von einem Kunden gewünschten gegrillten Lebensmittelspeise anzuzeigen, und bei Beladung der Waageneinrichtung mit Portions-Wiegefunktion das noch aufzuladende Differenzgewicht anzuzeigen. Alternativ ist die Waageneinrichtung mit Portions-Wiegefunktion dazu eingerichtet, Messwerte der gewogenen Lebensmittel-Portionen anzuzeigen. Dies ermöglicht es einer die Portionen bereitstellenden Person, die Portionen auf das exakte beabsichtigte Gewicht zu dimensionieren. Entsprechend ist dafür gesorgt, dass die Portionierung der Ware so einfach und wirtschaftlich wie möglich erfolgt.

Weiterhin kann die Waageneinrichtung mit Portions-Wiegefunktion dazu eingerichtet sein, Messwerte der gewogenen Lebensmittel-Portionen zu speichern. Die Waageneinrichtung mit Portions-Wiegefunktion kann dafür eingerichtet sein, Messdaten an eine Datenbank oder über eine Internet-Schnittstelle an eine Datenbank oder an einen Clouddienst mit einer Datenbank zu übermitteln.

Am Ende einer Zeiteinheit, wie zum Beispiel eines Tages, kann ermittelt werden, ob das Gewicht von gegrillten Lebensmittelanteilen, die über die Waageneinrichtung mit Portions-Wiegefunktion an Kunden verkauft wurde, genauso groß ist, wie das Gewicht von gegrillten Lebensmittelanteilen, die innerhalb dieser Zeiteinheit von der Grilleinrichtung entnommen wurde. Dieses Gewicht kann von der Waageneinrichtung mit Entnahme-Wiegefunktion ermittelt worden sein.

Damit lässt sich feststellen, ob Mitarbeiter Fleisch an der Kasse vorbei verkauft haben. Die Anwesenheit der Waageneinrichtung mit Entnahme-Wiegefunktion ist also vorteilhaft, um die Kontrolle des Mitarbeiters über die Waageneinrichtung mit Portions-Wiegefunktion auszuführen.

Die Einrichtung zur Gewichtsmessung von Anteilen eines gegrillten Lebensmittels kann außerdem eine Berechnungseinrichtung zur Berechnung der Differenz zwischen dem Gewicht des zu grillenden Lebensmittels vor dem Grillprozess und dem Gewicht der Summe der gegrillten entnommenen Lebensmittelanteile zwischen einem definierten Startereignis und einem definierten Endereignis aufweisen.

Alternativ oder zusätzlich kann die Berechnungseinrichtung auch dazu eingerichtet sein, die Differenz zwischen dem Gewicht der Summe der gegrillten entnommenen Lebensmittelanteile und der Summe der gewogenen Lebensmittel-Portionen zu berechnen.

Das Gewicht des zu grillenden Lebensmittels vor dem Grillprozess, auch als Ausgangsgewicht bezeichnet, kann dabei ebenfalls durch Wiegen festgestellt werden, oder aber einer Herstellerangabe entnommen werden.

Die Zeit zwischen dem Startereignis und dem Endereignis kann als Warenzyklus bezeichnet werden. Das Startereignis kann die Eingabe eines Startsignals sein, wie z.B. nach Einhängen eines neuen zu grillenden Lebensmittels in die Grillvorrichtung.

Das Endereignis kann die Eingabe eines Endsignals sein, wie z.B. nach vollständiger Umsetzung des zu grillenden Lebensmittels in entnommene gegrillten Lebensmittelanteile, oder auch bei Erreichung eines nicht mehr verwertbaren Restes des zu grillenden Lebensmittels in der Grillvorrichtung.

Auch das Gewicht des Rests in der Grillvorrichtung kann mit einer Waage gemessen werden, so dass dieses Rest-Gewicht in die Berechnung der Differenz zwischen dem Gewicht der entnommenen gegrillten Lebensmittelanteile und der Summe der gewogenen Lebensmittel-Portionen eingehen kann.

Die Berechnungseinheit kann des Weiteren dazu dienen, auszuwerten, wie viele Portionen je Zeiteinheit verkauft wurden, also bspw. je Stunde, je Tag, je Monat oder je Jahr.

In einer vorteilhaften Ausführungsform kann die Berechnungseinheit dazu eingerichtet sein, entsprechende Verkaufsstatistiken zu erstellen.

In einer weiteren vorteilhaften Ausführungsform der Einrichtung zur Gewichtsmessung von Anteilen eines gegrillten Lebensmittels umfasst die Waageneinrichtung mit Portions-Wiegefunktion eine Informationseinrichtung zur Ausgabe einer Information an den Benutzer hinsichtlich der Erreichung des beabsichtigten Portionsgewichts.

Diese Informationseinrichtung kann zum Beispiel eine Ampelanzeige mit gelbem Licht, wenn das gewünschte Portionsgewicht noch nicht erreicht wurde, mit grünem Licht, wenn das gewünschte Portionsgewicht erreicht wurde, und/ oder mit rotem Licht, wenn das gewünschte Portionsgewicht überschritten wurde, sein.

Alternativ zur Farbanzeige im Display könnte ein akustisches oder optisches Signal, z.B. ein Blitzlicht oder ein Ton, bei der Überschreitung des gewünschten Portionsgewichts bzw. Ausgabegewichtes realisiert werden.

Ein weiterer Aspekt der vorliegenden Erfindung ist eine Einrichtung zur Zubereitung eines zu grillenden Lebensmittels, umfassend eine Grilleinrichtung sowie eine beschriebene Einrichtung zur Gewichtsmessung von Anteilen eines gegrillten Lebensmittels.

Diese Einrichtung zur Zubereitung eines zu grillenden Lebensmittels kann auch als Grillsystem bezeichnet werden.

Die hier verwendete Grilleinrichtung ist diejenige, in der das zu grillende Lebensmittel zumindest teilweise gegrillt wird, und aus der heraus von dem Lebensmittel gegrillte, abgetrennte Lebensmittelanteile entnommen werden.

Mit der Erfindung wird zudem ein Verfahren zur Zubereitung eines zu grillenden Lebensmittels unter Ausführung von Gewichtskontrollen zur Verfügung gestellt, bei dem eine genannte Einrichtung zur Zubereitung eines zu grillenden Lebensmittels bereitgestellt wird, das Gewicht des zu grillenden Lebensmittels festgestellt wird, und das zu grillende Lebensmittel zumindest teilweise in der Grilleinrichtung gegrillt wird. Von dem Lebensmittel werden gegrillte Lebensmittelanteile abgetrennt, der Grilleinrichtung entnommen und einer Waageneinrichtung zugeführt. Mit einer Entnahme-Wiegefunktion der Waageneinrichtung wird das Gewicht der gegrillten entnommenen Lebensmittelanteile ermittelt, und mit einer Portions-Wiegefunktion der Waageneinrichtung wird das Gewicht von aus den gegrillten entnommenen Lebensmittelanteilen erstellten Lebensmittel-Portionen bestimmt.

Wie auch die beschriebene Einrichtung zur Gewichtsmessung von Anteilen eines gegrillten Lebensmittels kann auch das vorliegende Verfahren zur Zubereitung eines zu grillenden Lebensmittels unter Ausführung von Gewichtskontrollen diese Gewichtskontrollen bei der Zubereitung von Döner-Kebab Fleisch durchführen.

Das Gewicht des zu grillenden Lebensmittels vor dem Grillprozess, auch als Ausgangsgewicht bezeichnet, kann dabei ebenfalls durch Wiegen festgestellt werden, oder aber einer Herstellerangabe entnommen werden.

Als entnommene gegrillten Lebensmittelanteile sollen Lebensmittelanteile angesehen werden, welche sich nach Abtrennung in der Grillstation bzw. Grilleinrichtung aus dieser heraus bewegt haben und sich somit außerhalb des von einer Heizeinrichtung der Grilleinrichtung abgedeckten Bereichs befinden.

Sämtliche Messdaten aus den Wiegefunktionen können gespeichert und/ oder einer Auswertung zugeführt werden, so dass ersichtlich ist, wieviel bzw. welches Gewicht gegrillter Lebensmittelanteile aus einem zu grillenden Lebensmittel zur Verfügung gestellt werden, und wie groß das durch Abfluss bzw. Verdampfung von Wasser und/ oder Fett nicht mehr in den gegrillten Lebensmittelanteilen vorhandene Differenzgewicht ist.

Des Weiteren lässt sich daraus ermitteln, ob alle gegrillten Lebensmittelanteile tatsächlich in den gebuchten Verkauf gelangten, und wie groß der Anteil der nicht verbuchten Verkäufe ist.

Das Verfahren wird im Folgenden am Beispiel eines Kebab-Spießes und dessen Zubereitung erläutert.

Das Gewicht eines neuen, zu grillenden Kebab-Spießes wird erfasst. Der Kebab-Spieß wird in eine Grilleinrichtung eingesetzt.

Durch den bekannten Grillvorgang wird ein Teil des Fleisches des Kebab-Spießes gegart bzw. gegrillt. Dieser Teil wird vom Kebab-Spieß abgetrennt, der Grilleinrichtung entnommen und liegt zur Messung und Weiterverarbeitung auf der Waageneinrichtung mit Entnahme-Wiegefunktion.

Die Waageneinrichtung mit Entnahme-Wiegefunktion kann das Gewicht des auf ihr befindlichen Fleisches kontinuierlich messen, oder aber bei jeglicher Gewichts-Änderung, oder aber auch nur bei Gewichts-Zunahme um einen definierten Differenzbetrag, wie zum Beispiel 500g.

Von der Waageneinrichtung mit Entnahme-Wiegefunktion wird entnommenes, gegrilltes Fleisch auf die Waageneinrichtung mit Portions-Wiegefunktion übernommen, bis ein gewünschtes Portionsgewicht auf der Waageneinrichtung mit Portions-Wiegefunktion erreicht ist.

Die Waageneinrichtung mit Portions-Wiegefunktion und/oder die Waageneinrichtung mit Entnahme-Wiegefunktion überträgt dabei die jeweiligen Messwerte in eine Datenbank. Gegebenenfalls nicht mehr verwertbares Fleisch des Kebab-Spießes, wie zum Beispiel 10-15 % der Ausgangs-Fleischmenge, kann vom Spieß geschnitten werden und auf der Waageneinrichtung mit Portions-Wiegefunktion gewogen werden. Gegebenenfalls kann zu Beweissicherung ein Foto des Rest-Fleisches zusammen mit dem gewogenen Restgewicht gespeichert werden.

Sollte das Gewicht des Rest-Fleisches zu groß sein, um mit der Waageneinrichtung mit Portions-Wiegefunktion gewogen zu werden, ist es auch möglich, das Gewicht des Rest-Fleisches mit der Waageneinrichtung mit Entnahme-Wiegefunktion zu wiegen, und den Gewichts-Wert in die Waageneinrichtung mit Portions-Wiegefunktion einzugeben.

Des Weiteren umfasst die vorliegende Erfindung ein Computerprogramm, das in den internen, insbesondere nichtflüchtigen, Speicher eines digitalen Computers, insbesondere eines Smartphones oder eines Tablet-Computers, geladen werden kann und das Computerprogrammcode umfasst, der, wenn er auf dem digitalen Computer ausgeführt wird, die folgenden Schritte durchführt:
- Empfangen eines Werts des Gewichts des zu grillenden Lebensmittels,
- Empfangen von Werten des Gewichts entnommener gegrillter Lebensmittelanteile,
- Empfangen von Werten des Gewichts von aus den gegrillten entnommenen Lebensmittelanteilen erstellter Lebensmittel-Portionen, wobei die Gewichts-Werte entnommener Lebensmittelanteile sowie der erstellten Lebensmittel-Portionen gemäß dem vorgestellten Verfahren zur Zubereitung eines zu grillenden Lebensmittels unter Ausführung von Gewichtskontrollen ermittelt werden,
- Berechnung eines ersten Differenzgewichts zwischen dem Gewicht des zu grillenden Lebensmittels und der Summe der Gewichte der entnommenen Lebensmittelanteile sowie Sendung entsprechender Daten an eine Ausgabeeinrichtung, und
- Berechnung eines zweiten Differenzgewichts zwischen der Summe der Gewichte der entnommenen Lebensmittelanteile und der Summe der von aus den entnommenen Lebensmittelanteilen erstellten Lebensmittel-Portionen sowie Sendung entsprechender Daten an eine Ausgabeeinrichtung.

Die Information des Ausgangsgewichtes des zu grillenden Lebensmittels bzw. Fleisch-Spießes kann mit einer Zeitangabe in die Datenbank übertragen werden. Diese Eingabe kann den Beginn eines neuen Warenzyklus darstellen.

Das Computerprogramm kann derart ausgestaltet sein, dass es eine Anzeige einer grafischen Benutzeroberfläche auf einem Display initiiert, wobei die Benutzeroberfläche eine grafische Darstellung umfasst, die geeignet ist, die Gewichtswerte zu empfangen und errechnete Differenzgewicht auszugeben. Die Information des Ausgangsgewichtes und Restgewichtes einer Wareneinheit werden mit entsprechenden Zeitstempeln in der Datenbank erfasst.

Eine jeweils verwendete Datenbank verknüpft eine jeweilige Wareneinheit in Form des zu grillenden Lebensmittels mit der Waageneinrichtung oder mehreren Wageneinrichtungen.

Das Computerprogramm erlaubt es weiterhin, im Systemspeicher mehrere Warengruppen zu erstellen, beispielsweise geordnet hinsichtlich Referenzgewicht, Abfall und ähnlichen Kategorien.

Das Computerprogramm kann auch dazu eingerichtet sein, den Wiegeprozess durch die Waageneinrichtung mit Portions-Wiegefunktion mit der Auswahl des Produktes bzw. einer definierten Warengruppe zu starten. In die Datenbank wird dann das von Waageneinrichtung mit Portions-Wiegefunktion gemessene Gewicht der jeweiligen Portion mit Zeitstempel übertragen.

In der Datenbank können die von Waageneinrichtung mit Entnahme-Wiegefunktion und Waageneinrichtung mit Portions-Wiegefunktion erhaltenen Messwerte bzw. Informationen kombiniert gespeichert sein, von wo sie zusammen oder gegebenenfalls separat auswertbar abrufbar sind.

Daraus lassen sich in einfacher Weise Wochen-, Monats- und/ oder Jahresstatistiken erstellen und auf deren Basis betriebswirtschaftliche Entscheidungen treffen.

Zudem wird dadurch die leichte Berechnung von Abfallmengen und Schwund über die Zeit ermöglicht.

Die vorliegende Erfindung ist jedoch nicht auf die Kombination der Waageneinrichtung für die Entnahme-Wiegefunktion und der Waageneinrichtung für die Portions-Wiegefunktion eingeschränkt, sondern es kann auch nur die Waageneinrichtung mit Entnahme-Wiegefunktion genutzt werden mit dem Vorteil der Bestimmung der Gewichtsdifferenz zwischen dem zu grillenden Lebensmittel in Ausgangssituation und der Summe der gegrillten, entnommenen Lebensmittelanteile.

In alternativer Ausführungsform kann auch die Waageneinrichtung für die Portions-Wiegefunktion alleine verwendet werden mit dem Vorteil, dass bei Voraussetzung der Kenntnis der Menge bzw. des Gewichts der Summe der entnommenen Lebensmittelanteile kontrolliert werden kann, wie viel gegrilltes Lebensmittel überhaupt in den Verkauf gelangt.

So wird auch eine Einrichtung zur Gewichtsmessung von Anteilen eines gegrillten Lebensmittels zur Verfügung gestellt, welche eine Waageneinrichtung zum Wiegen von gegrillten Lebensmittelanteilen umfasst, wobei die Waageneinrichtung eine Entnahme-Wiegefunktion aufweist, und die Entnahme-Wiegefunktion die Bestimmung des Gewichts gegrillter, von von einer Grilleinrichtung entnommener Lebensmittelanteile ist.

Die Waageneinrichtung für die Entnahme-Wiegefunktion kann dazu eingerichtet sein, kontinuierlich oder bei jeder Veränderung des von der Waageneinrichtung für die Entnahme-Wiegefunktion gewogenen Gewichts einen entsprechenden Messwert festzustellen.

Des Weiteren kann die Waageneinrichtung für die Entnahme-Wiegefunktion eine Aufnahmeeinrichtung zur Aufnahme von von dem gegrillten Lebensmittel ablaufenden Wassers und/ oder Fetts aufweisen, und dazu eingerichtet sein, das aufgenommene Wasser und/ oder Fett zu wiegen.

Zudem kann die Waageneinrichtung für die Entnahme-Wiegefunktion eine Berechnungseinrichtung zur Berechnung zwischen einem definierten Startereignis und einem definierten Endereignis der Differenz zwischen dem Gewicht des zu grillenden Lebensmittels vor dem Grillprozess und dem Gewicht der Summe der entnommenen gegrillten Lebensmittelanteile aufweisen.

Ein weiterer Aspekt der Waageneinrichtung für die Entnahme-Wiegefunktion ist eine Einrichtung zur Zubereitung eines zu grillenden Lebensmittels, umfassend eine Grilleinrichtung sowie eine Einrichtung zur Gewichtsmessung von Anteilen eines gegrillten Lebensmittels unter Ausführung der Gewichtsmessungen mit der Waageneinrichtung für die Entnahme-Wiegefunktion.

Die hier verwendete Grilleinrichtung ist diejenige, in der das zu grillende Lebensmittel zumindest teilweise gegrillt wird, und aus der heraus von dem Lebensmittel gegrillte, abgetrennte Lebensmittelanteile entnommen werden.

Die Waageneinrichtung für die Entnahme-Wiegefunktion ermöglicht die Durchführung eines Verfahrens zur Zubereitung eines zu grillenden Lebensmittels unter Ausführung von Gewichtskontrollen, bei dem
- die vorgenannte Einrichtung zur Zubereitung eines zu grillenden Lebensmittels bereitgestellt wird,
- das Gewicht des zu grillenden Lebensmittels festgestellt wird,
- das zu grillende Lebensmittel zumindest teilweise in der Grilleinrichtung gegrillt wird,
- von dem Lebensmittel gegrillte Lebensmittelanteile abgetrennt werden, der Grilleinrichtung entnommen werden und einer Waageneinrichtung zugeführt werden, und
- mit einer Entnahme-Wiegefunktion der Waageneinrichtung das Gewicht der entnommenen Lebensmittelanteile ermittelt wird.

Zudem kann entsprechend auch ein Computerprogramm, insbesondere eine App, zur Verfügung gestellt werden, das in den internen, insbesondere nichtflüchtigen, Speicher eines digitalen Computers, insbesondere eines Smartphones oder eines Tablet-Computers, geladen werden kann und das Computerprogrammcode umfasst, der, wenn er auf dem digitalen Computer ausgeführt wird, die folgenden Schritte durchführt:
- Empfangen eines Werts des Gewichts des zu grillenden Lebensmittels,
- Empfangen von Werten des Gewichts entnommener Lebensmittelanteile, wobei die Gewichts-Werte entnommener Lebensmittelanteile gemäß dem beschriebenen Verfahren mittels der Entnahme-Wiegefunktion ermittelt werden, und
- Berechnung eines ersten Differenzgewichts zwischen dem Gewicht des zu grillenden Lebensmittels und der Summe der Gewichte der entnommenen Lebensmittelanteile sowie Sendung entsprechender Daten an eine Ausgabeeinrichtung.

Dieses Computerprogramm kann dazu eingerichtet sein, dass es eine Anzeige einer grafischen Benutzeroberfläche auf einem Display initiiert, wobei die Benutzeroberfläche eine grafische Darstellung umfasst, die geeignet ist, die Gewichtswerte zu empfangen und errechnete Differenzgewicht auszugeben.

Alternativ wird eine Einrichtung zur Gewichtsmessung von Anteilen eines gegrillten Lebensmittels zur Verfügung gestellt, welche eine Waageneinrichtung zum Wiegen von gegrillten Lebensmittelanteilen umfasst, wobei die Waageneinrichtung eine Portions-Wiegefunktion aufweist, und die Portions-Wiegefunktion die Bestimmung des Gewichts von aus einer Grilleinrichtung entnommenen gegrillten Lebensmittelanteilen erstellten Lebensmittel-Portionen ist.

Dabei kann vorgesehen sein, dass die Waageneinrichtung mit Portions-Wiegefunktion dazu eingerichtet ist, auf einer Anzeigeeinheit eine Auswahl von verfügbaren gegrillten Lebensmittelspeisen anzuzeigen und / oder das Gewicht von verfügbaren gegrillten Lebensmittelspeisen anzuzeigen, und durch Eingabe eines Steuerbefehls eine vom Kunden gewünschte gegrillte Lebensmittelspeise auszuwählen und/ oder das Gewicht der vom Kunden gewünschten gegrillten Lebensmittelspeise auszuwählen.

Weiterhin kann die Waageneinrichtung mit Portions-Wiegefunktion dazu eingerichtet sein, ein vorher definiertes Portionsgewicht einer von einem Kunden gewünschten gegrillten Lebensmittelspeise anzuzeigen, und bei Beladung der Waageneinrichtung mit Portions-Wiegefunktion das noch aufzuladende Differenzgewicht anzuzeigen, oder dass die Waageneinrichtung mit Portions-Wiegefunktion dazu eingerichtet ist, Messwerte der gewogenen Lebensmittel-Portionen anzuzeigen.

Alternativ oder hinzukommend ist die Waageneinrichtung mit Portions-Wiegefunktion dazu eingerichtet, Messwerte der gewogenen Lebensmittel-Portionen zu speichern.

Die Waageneinrichtung mit Portions-Wiegefunktion kann außerdem eine Berechnungseinrichtung zur Berechnung zwischen einem definierten Startereignis und einem definierten Endereignis der Differenz zwischen dem Gewicht der Summe der entnommenen gegrillten Lebensmittelanteile und der Summe der gewogenen Lebensmittel-Portionen umfassen.

Des Weiteren kann die Waageneinrichtung mit Portions-Wiegefunktion eine Informationseinrichtung zur Ausgabe einer Information an den Benutzer hinsichtlich der Erreichung des beabsichtigten Portionsgewichts aufweisen.

Ein Aspekt der Waageneinrichtung mit Portions-Wiegefunktion ist weiterhin eine Einrichtung zur Zubereitung eines zu grillenden Lebensmittels, welche eine Grilleinrichtung sowie eine Einrichtung zur Gewichtsmessung von Anteilen eines zu grillenden Lebensmittels unter Ausführung der Gewichtsmessungen mit der Waageneinrichtung mit Portions-Wiegefunktion aufweist.

Die hier verwendete Grilleinrichtung ist diejenige, in der das zu grillende Lebensmittel zumindest teilweise gegrillt wird, und aus der heraus von dem Lebensmittel gegrillte, abgetrennte Lebensmittelanteile entnommen werden.

Die Waageneinrichtung mit Portions-Wiegefunktion ermöglicht die Ausführung eines Verfahrens zur Zubereitung eines zu grillenden Lebensmittels unter Ausführung von Gewichtskontrollen, bei dem
- die vorgenannte Einrichtung zur Zubereitung eines zu grillenden Lebensmittels bereitgestellt wird,
- das zu grillende Lebensmittel zumindest teilweise in einer Grilleinrichtung gegrillt wird,
- von dem Lebensmittel gegrillte Lebensmittelanteile abgetrennt werden, und der Grilleinrichtung entnommen werden,
- das Gewicht der gegrillten entnommenen Lebensmittelanteile ermittelt wird, und
- mit einer Portions-Wiegefunktion einer Waageneinrichtung das Gewicht von aus den entnommenen Lebensmittelanteilen erstellten Lebensmittel-Portionen bestimmt wird.

Entsprechend kann für eine Kollaboration mit der Waageneinrichtung mit Portions-Wiegefunktion ein Computerprogramm, insbesondere eine App, zur Verfügung gestellt werden, das in den internen, insbesondere nichtflüchtigen, Speicher eines digitalen Computers, insbesondere eines Smartphones oder eines Tablet-Computers, geladen werden kann und das Computerprogrammcode umfasst, der, wenn er auf dem digitalen Computer ausgeführt wird, die folgenden Schritte durchführt:
- Empfangen von Werten des Gewichts entnommener gegrillter Lebensmittelanteile,
- Empfangen von Werten des Gewichts von aus den gegrillten entnommenen Lebensmittelanteilen erstellter Lebensmittel-Portionen, wobei die Gewichts-Werte der erstellten Lebensmittel-Portionen gemäß dem beschriebenen Verfahren mittels der Portions-Wiegefunktion ermittelt werden,
- Berechnung eines zweiten Differenzgewichts zwischen der Summe der Gewichte der entnommenen Lebensmittelanteile und der Summe der von aus den entnommenen Lebensmittelanteilen erstellten Lebensmittel-Portionen sowie Sendung entsprechender Daten an eine Ausgabeeinrichtung.

Dieses Computerprogramm kann dazu eingerichtet sein, dass es eine Anzeige einer grafischen Benutzeroberfläche auf einem Display initiiert, wobei die Benutzeroberfläche eine grafische Darstellung umfasst, die geeignet ist, die Gewichtswerte zu empfangen und errechnete Differenzgewicht auszugeben.

Die Erfindung wird im Folgenden anhand der in den beiliegenden Figuren dargestellten Ausführungsbeispiele erläutert.

Es zeigen:
Figur 1: eine Einrichtung zur Zubereitung eines zu grillenden Lebensmittels in schematischer Darstellung vor der Entnahme von Lebensmittelanteilen,
Figur 2: eine Einrichtung zur Zubereitung eines zu grillenden Lebensmittels in schematischer Darstellung bei der Entnahme von Lebensmittelanteilen,
Figur 3: Figur 1: eine Einrichtung zur Zubereitung eines zu grillenden Lebensmittels in schematischer Darstellung beim Wiegen von entnommenen Lebensmittelanteilen,
Figur 4: eine schematische Darstellung einer möglichen Ausführungsform der Waageneinrichtung mit Anzeigeeinheit,
Figur 5: eine schematische Darstellung einer möglichen Ausführungsform der Waageneinrichtung mit Informationseinrichtung und Berechnungseinrichtung,
Figur 6: eine weitere schematische Darstellung einer möglichen Ausführungsform der Waageneinrichtung mit Datenbank und Berechnungseinrichtung.

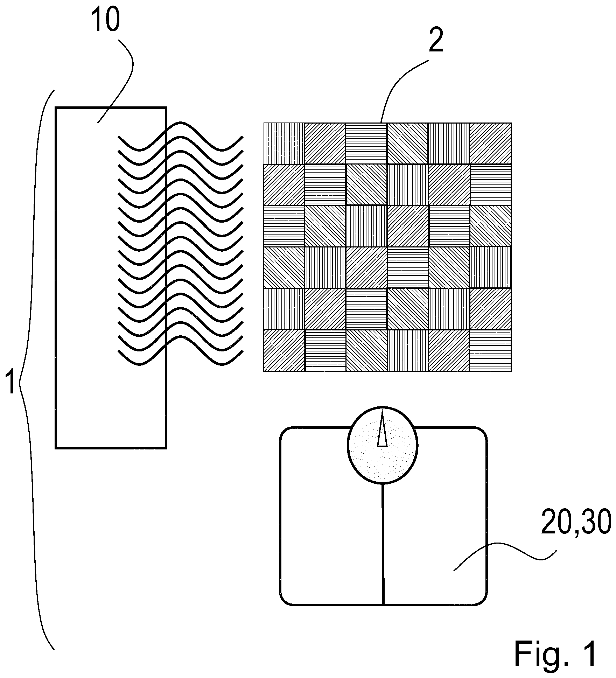

Zunächst soll der grundsätzliche Aufbau und die grundsätzliche Funktionsweise einer Ausführungsform der Einrichtung zur Zubereitung eines zu grillenden Lebensmittels 1 und damit auch der Einrichtung zur Gewichtsmessung von Anteilen eines gegrillten Lebensmittels anhand der Figuren 1-3 erläutert werden.

Die Einrichtung zur Zubereitung eines zu grillenden Lebensmittels 1 umfasst eine Grilleinrichtung 10, die auch als Grillstation bezeichnet werden kann. Abwärme dieser Grilleinrichtung 10 wirkt dabei auf ein zu grillendes Lebensmittel 2, wie zum Beispiel auf einen Döner-Kebab-Spieß. Dieses zu grillende Lebensmittel 2 wird dadurch gegart und zubereitet. Unterhalb des zu grillenden Lebensmittels 2 befindet sich eine Einrichtung zur Gewichtsmessung 20 in Form einer Waageneinrichtung für die Entnahme-Wiegefunktion 30.

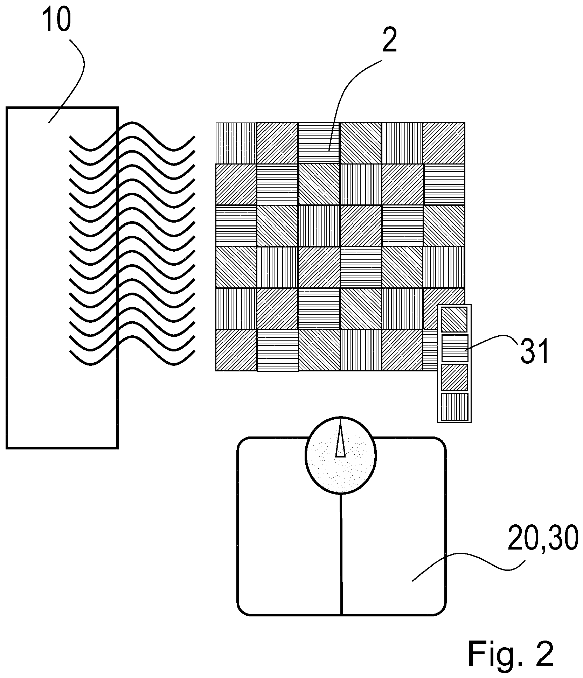

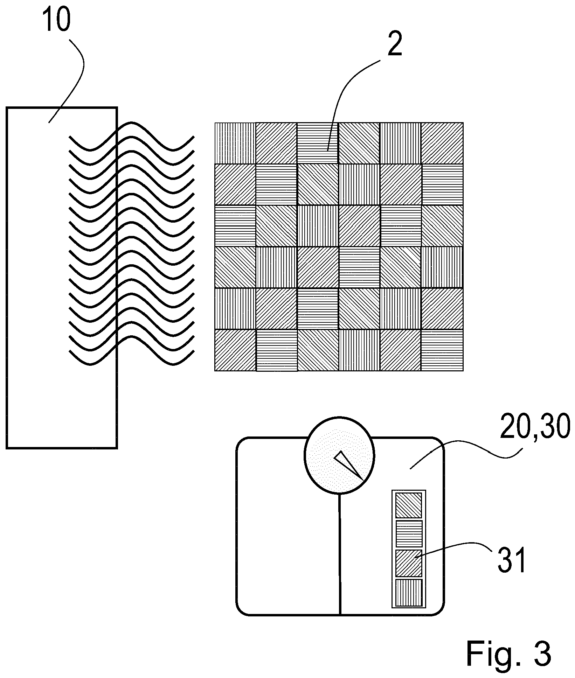

Wenn das zu grillende Lebensmittel 2 ausreichend gegart ist, werden von seiner Oberfläche Lebensmittelanteile abgeschnitten und der Grilleinrichtung 10 entnommen, wie es in Figur 2 angedeutet ist. Diese abgeschnittenen Lebensmittelanteile sind dann die sogenannten entnommenen Lebensmittelanteile 31. Diese entnommenen Lebensmittelanteile 31 fallen schwerkraftbedingt auf die Waageneinrichtung für die Entnahme-Wiegefunktion 30, siehe Figur 3. Die Waageneinrichtung für die Entnahme-Wiegefunktion 30 wiegt die entnommenen Lebensmittelanteile 31 entweder bei jedem verzeichneten Gewichtsanstieg, oder aber auch bei jeder Änderung des von der Waageneinrichtung für die Entnahme-Wiegefunktion 30 ermittelten Gewichtswertes.

Die Messwerte können einem hier nicht dargestellten Datenspeicher bzw. einer Auswerteeinheit zur Verfügung gestellt werden.

Die Summe der gemessenen Gewichtswerte der entnommenen Lebensmittelanteile 31 kann festgestellt werden und mit einem vor dem Grillprozess erfassten Gewichtswert des ungegrillten, zu grillenden Lebensmittels 2 verglichen werden.

Daraus lässt sich ermitteln, ob und wie viel Gewichtsverlust durch den Grillprozess erfolgte, insbesondere durch Verdampfung von Wasser und/oder durch das Abfließen erhitzten Fettes.

Gegebenenfalls kann die Waageneinrichtung für die Entnahme-Wiegefunktion 30 auch mit einem Auffangbehälter für erhitztes Fett ausgestattet sein, um den genauen Anteil des abgeflossenen Fettes zu ermitteln.

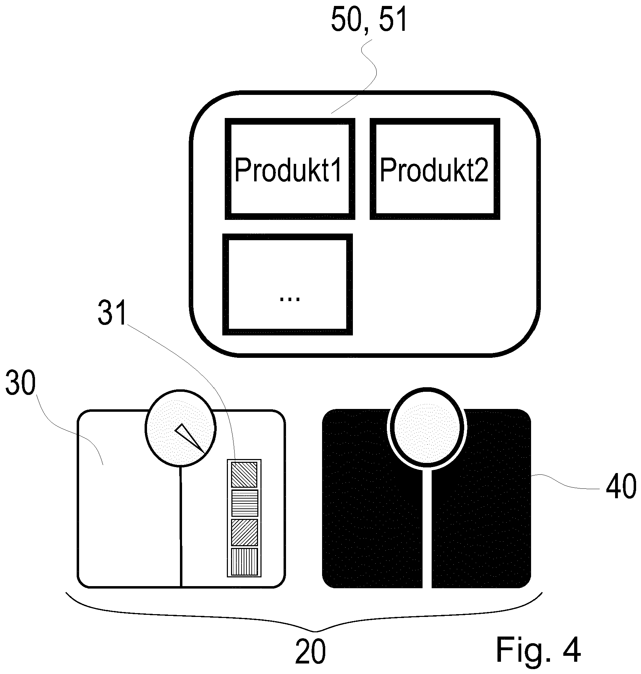

Figur 4 verdeutlicht, dass die Einrichtung zur Gewichtsmessung 20 des Weiteren eine Waageneinrichtung für die Portions-Wiegefunktion 40 aufweisen kann. Hier kann des Weiteren auch eine Anzeigeeinheit 50 vorhanden sein, mit der verfügbare Gerichte bzw. Produkte und/oder deren Gewichte anzeigbar sind. Diese Anzeigeeinheit 50 kann gegebenenfalls zusätzlich als Eingabeeinheit 51 ausgestaltet sein, die es ermöglicht, durch Eingabe eines Eingabebefehls ein angezeigtes Gericht bzw. Produkt und/oder dessen Gewicht auszuwählen.

So kann durch Anzeige und Auswahl eines bestimmten Produkts das dazugehörige Lebensmittel-Gewicht angezeigt werden.

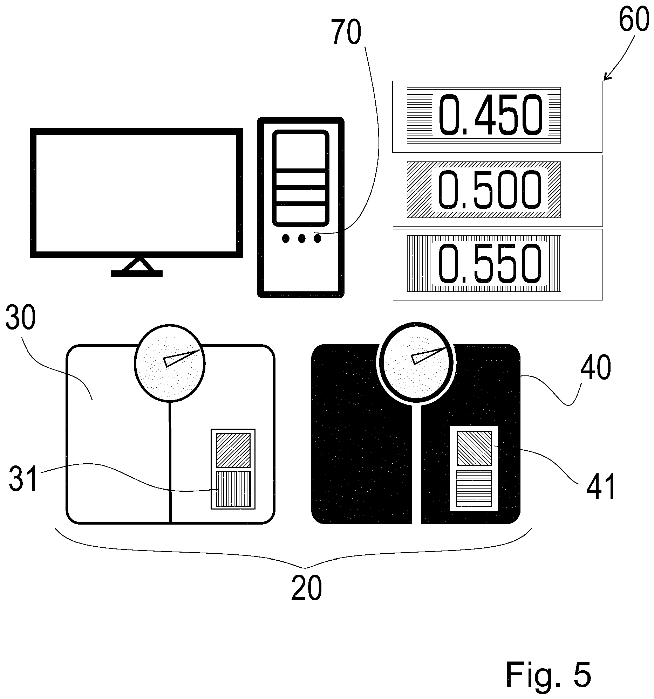

Wie in Figur 5 verdeutlicht, können entnommenen Lebensmittelanteile 31 von der Waageneinrichtung für die Entnahme-Wiegefunktion 30 nun teilweise auf die Waageneinrichtung für die Portions-Wiegefunktion 40 als Lebensmittel-Portionen 41 übernommen werden.

Dieser Übernahme-Vorgang kann so lange erfolgen, bis das ausgewählte Produkt-Lebensmittelgewicht erreicht wurde. Dazu unterstützt die Informationseinrichtung 30, die, wie durch die drei Anzeigen beispielhaft verdeutlicht, mit unterschiedlichen Farben des Displays signalisieren kann, wenn das Ziel-Gewicht der gewünschten Portion unterschritten ist, wenn es genau erreicht wurde, und wenn es überschritten wurde.

Es lässt sich somit feststellen, welches Gewicht eine jeweilige Lebensmittel-Portionen 41, die in den Verkauf gelangte, tatsächlich aufwies.

Mit einer angeschlossenen Berechnungseinrichtung 70 lassen sich geeignete Differenzwerte berechnen und gegebenenfalls in Statistiken verarbeiten.

Durch die dargestellte Kombination der Waageneinrichtung für die Entnahme-Wiegefunktion 30 mit der Waageneinrichtung für die Portions-Wiegefunktion 40 lässt sich somit ermitteln, wie viel des ursprünglich zu grillenden Lebensmittels 2 tatsächlich zur Verfügung gestellt werden konnte, und wie viel davon tatsächlich verkauft wurde, und in welchen Portionsgrößen.

Es ist nicht ausgeschlossen, dass die Einrichtung zur Gewichtsmessung 20 lediglich eine Waageneinrichtung für die Entnahme-Wiegefunktion 30 oder eine Waageneinrichtung für die Portions-Wiegefunktion 40 aufweist.

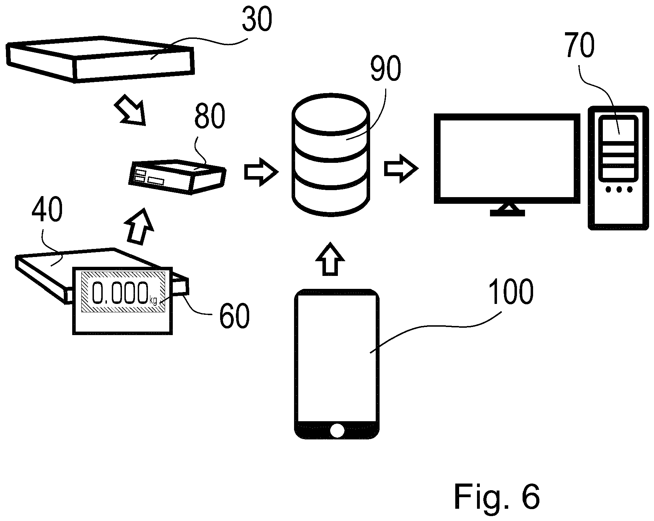

Figur 6 zeigt eine mögliche Ausführungsform der Waageneinrichtung mit Datenbank und Berechnungseinrichtung. Wir sind noch einmal die Waageneinrichtung für die Entnahme-Wiegefunktion 30 und die Waageneinrichtung für die Portions-Wiegefunktion 40 dargestellt, wobei die Waageneinrichtung für die Portions-Wiegefunktion 40 mit einer Informationseinrichtung 60 zur Ausgabe einer Information an den Benutzer hinsichtlich der Erreichung des beabsichtigten Portionsgewichts ausgestattet ist. Messwerte der Waageneinrichtungen 30,40 können über eine Internet-Schnittstelle 80 einer Datenbank 90 zugeführt werden, von der dann Messwerte bzw. Daten einer Berechnungseinrichtung 70 zugeführt werden können, zur Auswertung der Messwerte und Erstellung geeigneter Statistiken. Mit der Datenbank 90 kann auch ein Mobilfunk-Endgerät 100 zusammenwirken, welches mit einer entsprechenden App ausgestattet sein kann, die es beispielsweise ermöglicht, das Gewicht des zu grillenden Lebensmittels 2 vor dem Grillprozess einzugeben und der Berechnung der Differenzwerte zwischen der Summe der entnommenen Lebensmittelanteile und dem Ausgangsgewicht zuzuführen.

### Bezugszeichenliste

- 1: Einrichtung zur Zubereitung eines zu grillenden Lebensmittels
- 2: zu grillendes Lebensmittel
- 10: Grilleinrichtung
- 20: Einrichtung zur Gewichtsmessung
- 30: Waageneinrichtung für die Entnahme-Wiegefunktion
- 31: entnommene Lebensmittelanteile
- 40: Waageneinrichtung für die Portions-Wiegefunktion
- 41: Lebensmittel-Portion
- 50: Anzeigeeinheit
- 51: Eingabeeinheit
- 60: Informationseinrichtung
- 70: Berechnungseinrichtung
- 80: Internet-Schnittstelle
- 90: Datenbank
- 100: Mobilfunk-Endgerät

## Patentansprüche

1. Einrichtung zur Gewichtsmessung (20) von Anteilen eines gegrillten Lebensmittels, umfassend eine Waageneinrichtung zum Wiegen von gegrillten Lebensmittelanteilen, wobei die Waageneinrichtung eine Entnahme-Wiegefunktion und eine Portions-Wiegefunktion aufweist, und die Entnahme-Wiegefunktion die Bestimmung des Gewichts gegrillter, von von einer Grilleinrichtung entnommener Lebensmittelanteile (31) ist, und die Portions-Wiegefunktion die Bestimmung des Gewichts von aus den entnommenen Lebensmittelanteilen erstellten Lebensmittel-Portionen (41) ist.

2. Einrichtung zur Gewichtsmessung von Anteilen eines gegrillten Lebensmittels nach Anspruch 1, **dadurch gekennzeichnet, dass** eine Waageneinrichtung für die Entnahme-Wiegefunktion (30) und eine Waageneinrichtung für die Portions-Wiegefunktion (40) in derselben Waage eingerichtet sind.

3. Einrichtung zur Gewichtsmessung von Anteilen eines gegrillten Lebensmittels nach Anspruch 1, **dadurch gekennzeichnet, dass** die Waageneinrichtung für die Entnahme-Wiegefunktion (30) eine Entnahme-Waage ist, und die Waageneinrichtung für die Portions-Wiegefunktion (40) eine Portions-Waage ist, wobei die Entnahme-Waage eine andere Waage ist als die Portions-Waage.

4. Einrichtung zur Gewichtsmessung von Anteilen eines gegrillten Lebensmittels nach einem der vorhergehenden Ansprüche, **dadurch gekennzeichnet, dass** die Waageneinrichtung mit Entnahme-Wiegefunktion (30) dazu eingerichtet ist, kontinuierlich oder bei jeder Veränderung des von der Waageneinrichtung mit Entnahme-Wiegefunktion (30) gewogenen Gewichts einen entsprechenden Messwert festzustellen.

5. Einrichtung zur Gewichtsmessung von Anteilen eines gegrillten Lebensmittels nach einem der vorhergehenden Ansprüche, **dadurch gekennzeichnet, dass** die Waageneinrichtung mit Entnahme-Wiegefunktion (30) eine Aufnahmeeinrichtung zur Aufnahme von von dem gegrillten Lebensmittel ablaufenden Wassers und/ oder Fetts aufweist, und dazu eingerichtet ist, das aufgenommene Wasser und/ oder Fett zu wiegen.

6. Einrichtung zur Gewichtsmessung von Anteilen eines gegrillten Lebensmittels nach einem der vorhergehenden Ansprüche, **dadurch gekennzeichnet, dass** die Waageneinrichtung mit Portions-Wiegefunktion (40) dazu eingerichtet ist, auf einer Anzeigeeinheit (50) eine Auswahl von verfügbaren gegrillten Lebensmittelspeisen anzuzeigen und/ oder das Gewicht von verfügbaren gegrillten Lebensmittelspeisen anzuzeigen, und durch Eingabe eines Steuerbefehls eine vom Kunden gewünschte gegrillte Lebensmittelspeise auszuwählen und/ oder das Gewicht der vom Kunden gewünschten gegrillten Lebensmittelspeise auszuwählen.

7. Einrichtung zur Gewichtsmessung von Anteilen eines gegrillten Lebensmittels nach einem der vorhergehenden Ansprüche, **dadurch gekennzeichnet, dass** die Waageneinrichtung mit Portions-Wiegefunktion (40) dazu eingerichtet ist, ein vorher definiertes Portionsgewicht einer von einem Kunden gewünschten gegrillten Lebensmittelspeise anzuzeigen, und bei Beladung der Waageneinrichtung mit Portions-Wiegefunktion (40) das noch aufzuladende Differenzgewicht anzuzeigen, oder dass die Waageneinrichtung mit Portions-Wiegefunktion (40) dazu eingerichtet ist, Messwerte der gewogenen Lebensmittel-Portionen (41) anzuzeigen.

8. Einrichtung zur Gewichtsmessung von Anteilen eines gegrillten Lebensmittels nach einem der vorhergehenden Ansprüche, **dadurch gekennzeichnet, dass** die Waageneinrichtung mit Portions-Wiegefunktion (40) dazu eingerichtet ist, Messwerte der gewogenen Lebensmittel-Portionen (41) zu speichern.

9. Einrichtung zur Gewichtsmessung von Anteilen eines gegrillten Lebensmittels nach einem der vorhergehenden Ansprüche, **dadurch gekennzeichnet, dass** die Einrichtung zur Gewichtsmessung von Anteilen eines gegrillten Lebensmittels eine Berechnungseinrichtung (70) zur Berechnung zwischen einem definierten Startereignis und einem definierten Endereignis
i) der Differenz zwischen dem Gewicht des zu grillenden Lebensmittels (2) vor dem Grillprozess und dem Gewicht der Summe der gegrillten entnommenen Lebensmittelanteile (31), und/ oder
ii) der Differenz zwischen dem Gewicht der Summe der gegrillten entnommenen Lebensmittelanteile (31) und der Summe der gewogenen Lebensmittel-Portionen (41)
umfasst.

10. Einrichtung zur Gewichtsmessung von Anteilen eines gegrillten Lebensmittels nach einem der vorhergehenden Ansprüche, **dadurch gekennzeichnet, dass** die Waageneinrichtung mit Portions-Wiegefunktion (40) eine Informationseinrichtung (60) zur Ausgabe einer Information an den Benutzer hinsichtlich der Erreichung des beabsichtigten Portionsgewichts umfasst.

11. Einrichtung zur Zubereitung eines zu grillenden Lebensmittels (1), umfassend eine Grilleinrichtung (10) sowie eine Einrichtung zur Gewichtsmessung (20) von Anteilen eines gegrillten Lebensmittels gemäß einem der Ansprüche 1 bis 10.

12. Verfahren zur Zubereitung eines zu grillenden Lebensmittels 2 unter Ausführung von Gewichtskontrollen, bei dem
- eine Einrichtung zur Zubereitung eines zu grillenden Lebensmittels 1 gemäß Anspruch 11 bereitgestellt wird,
- das Gewicht des zu grillenden Lebensmittels (2) festgestellt wird,
- das zu grillende Lebensmittel (2) zumindest teilweise in der Grilleinrichtung (10) gegrillt wird,
- von dem Lebensmittel gegrillte Lebensmittelanteile abgetrennt werden, der Grilleinrichtung (10) entnommen werden und einer Waageneinrichtung zugeführt werden,
- mit einer Entnahme-Wiegefunktion der Waageneinrichtung das Gewicht der gegrillten entnommenen Lebensmittelanteile (31) ermittelt wird, und
- mit einer Portions-Wiegefunktion der Waageneinrichtung das Gewicht von aus den gegrillten entnommenen Lebensmittelanteilen (31) erstellten Lebensmittel-Portionen (41) bestimmt wird.

13. Computerprogramm, das in den internen, insbesondere nichtflüchtigen, Speicher eines digitalen Computers, insbesondere eines Smartphones oder eines Tablet-Computers, geladen werden kann und das Computerprogrammcode umfasst, der, wenn er auf dem digitalen Computer ausgeführt wird, die folgenden Schritte durchführt:
- Empfangen eines Werts des Gewichts des zu grillenden Lebensmittels (2),
- Empfangen von Werten des Gewichts gegrillter entnommener Lebensmittelanteile (31),
- Empfangen von Werten des Gewichts von aus den gegrillten entnommenen Lebensmittelanteilen (31) erstellter Lebensmittel-Portionen (41), wobei die Gewichts-Werte entnommener Lebensmittelanteile (31) sowie der erstellten Lebensmittel-Portionen (41) gemäß dem Verfahren nach Anspruch 12 ermittelt werden,
- Berechnung eines ersten Differenzgewichts zwischen dem Gewicht des zu grillenden Lebensmittels (2) und der Summe der Gewichte der entnommenen Lebensmittelanteile (31) sowie Sendung entsprechender Daten an eine Ausgabeeinrichtung, und
- Berechnung eines zweiten Differenzgewichts zwischen der Summe der Gewichte der entnommenen Lebensmittelanteile (31) und der Summe der von aus den entnommenen Lebensmittelanteilen (31) erstellten Lebensmittel-Portionen (41) sowie Sendung entsprechender Daten an eine Ausgabeeinrichtung.

14. Computerprogramm nach Anspruch 13, **dadurch gekennzeichnet, dass** es eine Anzeige einer grafischen Benutzeroberfläche auf einem Display initiiert, wobei die Benutzeroberfläche eine grafische Darstellung umfasst, die geeignet ist, die Gewichtswerte zu empfangen und errechnete Differenzgewicht auszugeben.
